# EUROPÄISCHE PATENTSCHRIFT

(11) **EP 2 765 345 B1**
(45) Veröffentlichungstag und Bekanntmachung des Hinweises auf die Patenterteilung: **28.12.2016**
(21) Anmeldenummer: 14000407.8
(22) Anmeldetag: 04.02.2014
(51) Int. Cl.: F16L 57/06, F16L 43/00, B65G 53/14, B65G 53/28, F04D 17/02, F04D 23/00, F04D 29/28

(54) **Schutzvorrichtung und Absaugvorrichtung**
Protective device and extractor device
Dispositif de protection et dispositif d'aspiration

(30) Priorität: 06.02.2013 DE 202013001142 U
(43) Veröffentlichungstag der Anmeldung: 13.08.2014
(73) Patentinhaber: Schuko Heinz Schulte-Südhoff GmbH & Co. KG, 88348 Bad Saulgau (DE)
(72) Erfinder: Schulte-Südhoff, Andre, 49196 Bad Laer (DE)
(74) Vertreter: Otten, Roth, Dobler & Partner mbB Patentanwälte

(56) Entgegenhaltungen:
- DE-A1- 19 608 154
- DE-A1- 19 612 887
- DE-C- 323 701
- DE-U1- 9 300 684
- US-A- 288 550
- US-A- 571 612
- US-A- 1 044 181
- US-A- 1 518 705
- US-A- 1 850 545

## Beschreibung

Die Erfindung betrifft eine Hohlstruktur mit einer Schutzvorrichtung zum Schutz von Hohlstrukturen in Transportvorrichtungen beziehungsweise Abscheidevorrichtungen sowie eine Absaugvorrichtung zum Absaugen von Körpern, insbesondere von Abfallgut aus einem Bearbeitungsprozess einer Werkzeugmaschine.

US-1044181 offenbart eine Hohlstruktur nach dem Oberbegriff des Anspruchs 1.

Aus dem Stand der Technik sind handelsübliche Absaugvorrichtungen bekannt, die beispielsweise über ein Gebläse verfügen und den abzusaugenden Staub oder die abzusaugenden Bearbeitungsabfälle über Schläuche oder Rohre abtransportieren. Die abgesaugten Körper reiben beim Transportvorgang an den Innenwänden der Schläuche oder Rohre beziehungsweise stoßen, beschleunigt durch die Absaugkräfte, gegen die Innenwände und können somit nach einer gewissen Zeit die Schläuche beziehungsweise Rohre beschädigen. Um diesem Abnutzungsprozess entgegenzuwirken, werden die Rohre oder Schläuche zuweilen von außen verstärkt, bei großen Absauganlagen zum Teil auch von einem Betonmantel umgeben, sodass die abgesaugten Körper, wenn sie gegen die Innenwände stoßen, gegen eine stabile, massereiche Struktur prallen.

Aufgabe der Erfindung ist es, die Wartungsanfälligkeit von Transportvorrichtungen beziehungsweise Abscheidevorrichtung, insbesondere Absaugvorrichtungen und Förderanlagen verbessern zu können.

Diese Aufgabe wird durch die Merkmale des Anspruchs 1 gelöst.

Durch die in den abhängigen Ansprüchen genannten Maßnahmen sind vorteilhafte Ausführungen und Weiterbildungen der Erfindung möglich.

Dementsprechend wird erfindungsgemäß vorgeschlagen, eine Schutzvorrichtung zum Schutz von Hohlstrukturen in Transportvorrichtungen und/oder Abscheidevorrichtungen einzusetzen. Bei derartigen Transportvorrichtungen oder Abscheidevorrichtungen handelt es sich beispielsweise um Absaugvorrichtungen, Förderanlagen, filternde Abscheider oder Fliehkraftabscheider, welche zum Transport beziehungsweise Abscheiden der zu transportierenden Körper ausgebildet sind und Hohlstrukturen umfassen, in denen die Körper in einer Transportrichtung transportiert werden können.

Eine typische Anwendung derartiger Absaugvorrichtungen steht im Zusammenhang mit Werkzeugmaschinen, bei denen beim Bearbeitungsprozess anfallende Stäube, Späne oder sonstige Abfallkörper abgesaugt werden sollen.

Denkbar ist grundsätzlich auch eine Anwendung der vorgeschlagenen Schutzvorrichtung bei Förderanlagen, bei denen keine Abfallprodukte im eigentlichen Sinn transportiert werden, sondern Materialien, die weiterverarbeitet werden sollen. Weitere Beispiele denkbarer Anwendungen sind filternde Abscheider oder Fliehkraftabscheider. Bei filternden Abscheidern wird in der Regel ein Stoffgemisch transportiert, welches nach unterschiedlichen Kriterien sortiert beziehungsweise aufgespalten werden soll. Dementsprechend wird also ein Teil des transportierten Gemenges ausgesondert beziehungsweise herausgefiltert. Bei Fliehkraftabscheidern wird zum Aussortieren die Fliehkraft ausgenutzt, das heißt, dass auf massereiche Körper eine stärke Fliehkraft beim Durchlaufen einer Kreisbahn wirkt als auf masseärmere Körper, was zur Auftrennung ausgenutzt wird. Die entsprechenden Transportvorrichtungen oder Abscheidevorrichtungen verwenden als Hohlstrukturen zum Transport der Körper in der Regel insbesondere Schläuche oder Rohre.

Um die Hohlstruktur an ihrer Innenseite gegen die Stöße der transportierten Körper zuschützen, ist eine Prallplatte vorgesehen, welche der schützenden Abdeckung der Hohlstruktur dient. Die Prallplatte der erfindungsgemäßen Schutzvorrichtung ist dazu ausgebildet, in der Hohlstruktur so angebracht zu werden, dass der zu schützende Teil der Hohlstruktur in der Transportrichtung abgedeckt ist, sodass die Körper beim Transport auf die Prallplatte anstelle des zu schützenden Teils der Hohlstruktur prallen können. Ein wesentlicher Vorteil der Erfindung besteht darin, dass überhaupt eine Schutzvorrichtung im eigentlichen Sinne bereitgestellt werden kann. Durch die schützende Abdeckung wird ermöglicht, dass die transportierten Teile auf bestimmte Stellen in der Hohlstruktur gar nicht mehr prallen können, da diese Teile abgedeckt werden. Durch die erfindungsgemäße Maßnahme wird also ein bestimmter Teil des Abnutzungsprozesses der Hohlstruktur als Teil der Transport- beziehungsweise Abschaltevorrichtungen nicht nur verlangsamt, sondern in vorteilhafter Weise gestoppt.

Die Prallplatte besitzt eine flächige Ausdehnung und ist derart in der Hohlstruktur gelagert, dass die Prallplatte senkrecht zu dieser Fläche abfedernd und/oder elastisch bewegbar und/oder auslenkbar ist. Insbesondere ist die Prallplatte bei dieser Weiterbildung der Schutzvorrichtung gemäß der Erfindung so angebracht, dass sie beim Aufprall der transportierten Körper sich biegen kann. Stößt ein transportierter Körper auf die Innenwand einer Hohlstruktur, handelt es sich in vielen Fällen um einen sogenannten inelastischen Stoß. Bei einem elastischen Stoß nimmt die Wand, auf die der Körper prallt, den Impuls des transportierten Körpers auf und gibt den betragsgleichen Impuls wieder an den transportierten Körper ab, insgesamt erfährt die Wand, auf die der transportierte Körper prallt, also den doppelten Impuls. Wird die Masse der Wand, wie im Stand der Technik bei handelsüblichen Vorrichtungen üblich, vergrößert, indem eine Verstärkung (gegebenenfalls mit Beton) an dieser Stelle angebracht wird, so vermindert sich in entsprechender Weise der Rückstoß, der auf die Wand übertragen wird; in analoger Weise wird bei diesen handelsüblichen Absaugvorrichtungen das gleiche Prinzip angewandt, warum ein Gewehr beim Schießen gegen die Schulter gepresst wird, um so den Rückstoß zu verringern. In der Praxis kommt es beim Aufprall der Körper auf die Hohlstruktur regelmäßig jedoch zu inelastischen Stößen, bei denen ein Teil der kinetischen Energie der transportierten Körper aufgenommen wird und beispielsweise zu Verformungen der Hohlstrukturen an ihrer Innenwand führt. Durch die Maßnahme, dass die Prallplatte abfedernd, elastisch bewegbar beziehungsweise auslenkbar ausgebildet ist, wird ermöglicht, den inelastischen Anteil der Stöße zu verringern. Zumindest wird ermöglicht, dass weniger kinetische Energie zur Verformung eines Bauteils der Transport- beziehungsweise Abscheidevorrichtungen beiträgt. Vielmehr wird ein Teil der kinetischen Energie zur Auslenkung beziehungsweise zum Durchbiegen der Prallplatte verwendet, somit in der Prallplatte kurzzeitig gespeichert, und anschließend wieder abgegeben, was beispielsweise zur Beschleunigung des transportierten Körpers führen kann.

Denkbar ist auch, dass die Prallplatte sich durch den Aufprall des transportierten Körpers bewegt, beispielsweise auslenkt oder in Schwingung versetzt wird und die dadurch angeregte Bewegung oder Schwingung der Prallplatte sich im Laufe der Zeit dämpft, beispielsweise auch durch nachfolgende Stöße mit weiteren, nachfolgenden transportierenden Körpern. Wenn die Prallplatte durch den Stoß des transportierten Körper also abfedert beziehungsweise sich elastisch biegt, führt diese zunächst elastische Verformung dazu, dass der Körper die Energie wieder abgibt und somit in seinen Ausgangszustand wieder zurückkehrt. Eine dauerhafte, plastische Verformung bedeutet stattdessen einen inelastischen Anteil, der zur Energieaufnahme (z.B. eine Energieaufnahme der Wand) führt und somit eine Beschädigung der Hohlstruktur bedeutet. Durch die Maßnahme, die Prallplatte demnach senkrecht abfedernd, elastisch bewegbar, beziehungsweise auslenkbar zu gestalten, wobei sich die Prallplatte insbesondere beim Aufprall biegen kann, wird somit dafür gesorgt, dass der Stoßvorgang möglichst elastisch abläuft, die Stoßenergie annähernd vollständig auf den aufprallenden Körper zurück übertragen wird, und die Beschädigung deutlich verringert werden kann.

Insgesamt besitzt die Prallplatte eine flächige Ausdehnung, sodass die Wahrscheinlichkeit, dass der transportierte Körper auf die Prallplatte und nicht die Hohlstruktur stößt, vergrößert wird. Die Fläche kann so gewählt werden, dass praktisch der gesamte, zu schützende Teil der Hohlstruktur verdeckt wird. Insgesamt verläuft bei der Schutzvorrichtung die Abdeckung der Hohlstruktur in der Transportrichtung, das heißt, der transportierte Körper wird auf seinem Weg in Richtung des entsprechenden Teils der Hohlstruktur zunächst auf die Prallplatte stoßen.

Bei einer vorteilhaften Ausführungsform der Erfindung ist an einer Seite der Prallplatte ein Festlager zur festen Anbringung der Prallplatte oder ein Schwenklager zur schwenkbaren Anbringung der Prallplatte an der Hohlstruktur vorhanden. Dadurch wird das Verhalten der Prallplatte beim Aufprall des Körpers beeinflusst, sodass ein möglichst reibungsloser Transport erfolgen kann. Im Bereich des Festlagers wird sich die Prallplatte gar nicht oder kaum bewegen. Je weiter sich ein Punkt auf der Prallplatte vom Festlager weg befindet, desto mehr kann er beim Verbiegen der Prallplatte aus seiner Normalposition ausgelenkt werden. Bei einem Schwenklager wird der Freiheitsgrad der Prallplatte dahingehend eingeschränkt, dass eine Translationsbewegung vermieden, eine Rotationsbewegung jedoch ermöglicht wird. Die kinetische Energie kann sodann, z.B. beim Biegen der Platte, in eine Drehbewegung umgewandelt werden.

Ein Loslager ist zur Aufnahme von Bewegungen eines Endes der Prallplatte aufgrund von Biegungen der Prallplatte vorgesehen. Bei der Erfindung wird das entsprechende Ende der Prallplatte ebenfalls in seinen Freiheitsgraden eingeschränkt, allerdings wird eine Translationsbewegung des Endes der Prallplatte ermöglicht, und zwar auf einer definierten Bahn je nach Art des Lagers. Wenn sich die Platte biegen soll, ohne dass eine dauerhafte Verformung der Prallplatte zustande kommt, so ist es vorteilhaft, wenn die Platte gewisse Freiheitsgrade besitzt, sodass Auslenkungen oder Biegungen ermöglicht werden.

Eine Kombination aus Festlager und Loslager ist vorgesehen . Für eine Biegung oder Auslenkung ist es regelmäßig ausreichend, wenn ein Ende fest eingespannt ist, während das andere Ende eine Bewegung durchführen kann. Somit kann auch vermieden werden, dass sich die Prallplatte, angetrieben durch die Stöße der transportieren Körper, insgesamt mit ihrem Schwerpunkt bewegt, das heißt, dass sie, angetrieben durch die Stöße, innerhalb der Hohlstruktur verschoben wird. Ein solcher Effekt würde dazu führen, dass ein Teil der Hohlstruktur, der eigentlich geschützt werden soll, nicht mehr vollständig durch die Prallplatte abgedeckt wird.

Bei einer vorteilhaften Weiterbildung der Erfindung weist die Prallplatte ein Wellenprofil auf. Grundsätzlich kann ein solches Wellenprofil als Verstärkungsstruktur in der Prallplatte wirken. Außer einem Wellenprofil kann auch beispielsweise auch eine Zickzack-Struktur verwendet werden. Darüber hinaus sorgt diese Strukturierung der Platte, insbesondere in Form des Wellenprofils dafür, dass die Biegung der Platte oder deren Bewegungs- und Ausdehnungseigenschaften gewissermaßen anisotrop werden und eine Vorzugsrichtung erhalten. Die Platte wird sich hinsichtlich ihrer mechanischen Eigenschaften entlang der Rillen des Wellenprofils anders verhalten als senkrecht dazu. Im Hinblick auf die Durchbiegung der Platte kann somit eine Vorzugsrichtung ausgewählt werden. Dadurch, dass auch die Biegeeigenschaften bzw. abfedernden Eigenschaften der Platte vorbestimmt sind, kann der Stoßvorgang einigermaßen kontrolliert ablaufen, wodurch die Lebensdauer der Prallplatte entscheidend verlängert werden kann.

Bei einem Ausführungsbeispiel der Erfindung weist das Wellenprofil in der Prallplatte Profilrillen auf, welche in Transportrichtung anordenbar sind. Die Schutzvorrichtung kann also entsprechend ausgerichtet werden. Prallen die transportierten Körper auf das Wellenprofil oder die Zickzack-Struktur mit den entsprechenden Profilrillen, die ebenfalls in Transportrichtung verlaufen, so wird den abprallenden Körpern eine Vorzugsrichtung in die weitere Transportrichtung mitgegeben. Dadurch wird zum einen ermöglicht, dass der Transportwiderstand in der Hohlstruktur verringert wird, da kein mechanisches Hindernis in Transportrichtung vorliegt. Ferner wird hinsichtlich des Luftstromes in vorteilhafter Weise eine laminare Strömung ermöglicht. Des Weiteren kann durch eine geschickte Ausrichtung der Prallplatte beziehungsweise der Schutzvorrichtung ermöglicht werden, dass die abprallenden Körper nicht unmittelbar nach dem Stoß gegen einen anderen Teil der Hohlstruktur prallen und diesen beschädigten (beispielsweise den Teil der Hohlstruktur, welcher der Prallplatte unmittelbar gegenüber liegt). Diese Maßnahme ermöglicht zum anderen also auch, die Langlebigkeit der Schutzvorrichtung sowie der Transport- beziehungsweise Abscheidevorrichtung zu erhöhen.

Die Prallplatte kann im Allgemeinen aus verschiedenen Materialien bestehen, insbesondere solchen, die elastische Eigenschaften aufweisen. Vorzugsweise ist die Prallplatte aus Stahl, besonders bevorzugt aus Edelstahl beziehungsweise aus Federstahl zufertigen. In vorteilhafter Weise können diese Materialien inert ausgebildet sein, das heißt nicht anfällig im Bezug auf Korrosion oder andere chemische oder gegebenenfalls auch physikalische Prozesse, welche dazu führen können, dass das Material spröde wird. Würde stattdessen ein plastisches Material gewählt werden, würde das Verhalten des Materials zu Verformungen führen, welche es früher oder später mit sich bringen, dass die Schutzvorrichtung schneller erneuert werden muss.

Dementsprechend zeichnet sich eine Absauvorrichtung zum

Absaugen von Körpern, insbesondere von Abfallgut aus einem Bearbeitungsprozess an einer Werkzeugmaschine, insbesondere für die Holzbearbeitung oder Span abhebender Bearbeitung mit einer Holstruktur zum Abtransport der abgesaugten Körper dadurch aus, dass in der Hohlstruktur wenigstens eine erfindungsgemäße Schutzvorrichtung beziehungsweise eine Schutzvorrichtung gemäß einer Ausführungsform oder einer Weiterbildung der Erfindung angeordnet ist. Bei der erfindungsgemäßen Absaugvorrichtung kann es sich bei der Hohlstruktur beispielsweise um ein Absaugrohr handeln. Durch diese Maßnahme, eine entsprechende Schutzvorrichtung gemäß der Erfindung vorzusehen, können die bereits beschriebenen vorteilhaften Eigenschaften ausgenutzt werden, insbesondere kann die Wartungsanfälligkeit verbessert werden und die Absaugvorrichtung langlebiger werden. Ferner wird eine Materialeinsparung ermöglicht, weil verstärkende Anbauten an die Absaugrohre vermieden werden können; diese Maßnahme führt also auch zu einer Kosteneinsparung.

Besonders stark ist der Aufprall eines transportierten Körpers auf einer Fläche dann, wenn er senkrecht oder annähernd senkrecht erfolgt. Gerade dann, wenn der Verlauf der Hohlstruktur eine Krümmung aufweist, wird ein transportierter Körper oft im Bereich der Krümmung in einem Winkel zwischen 45° und 90° gegen die Wand der Hohlstruktur prallen.

Ein solcher Aufprall kommt mechanisch dadurch zustande, dass eine Krümmung in der Hohlstruktur zwangsläufig bedeutet, dass der zu transportierende Körper seine Bewegungsrichtung bei der Bewegung durch die Holstruktur und die Krümmung seine Bewegungsrichtung ändern muss. Um die Bewegungsrichtung ändern zu können, muss der Körper also eine Beschleunigung erfahren. Reicht die Beschleunigung in Richtung der Transportrichtung, die vom Gebläse herrührt, nicht aus, um den Körper in sehr kurzer Zeit entsprechend zu beschleunigen, so wird der Körper "aus der Kurve getragen" und gegen die Hohlstruktur prallen. Aus diesem Grund kann in besonders vorteilhafter Weise die Schutzvorrichtung so angeordnet werden, dass sie in einer Krümmung in der Hohlstruktur verläuft, in der die transportierten Körper beim Transport eine Änderung der Bewegungsrichtung erfahren. Durch diese verbesserte Schutzwirkung kann in vorteilhafter Weise die Lebensdauer der Absaugvorrichtung erhöht werden.

Werden bei einer Ausführungsform der Erfindung eine Lagerung der Prallplatte durch Festlager beziehungsweise Schwenklager und Loslager verwendet, so kann das Fest- beziehungsweise Schwenklager in Transportrichtung vor dem Loslager angeordnet sein. Ein Teil der Kraftwirkung der aufprallenden, transportierten Körper wird gegenüber der Prallplatte in Transportrichtung verlaufen, sodass diese also auch eine Kraftwirkung in Transportrichtung erfährt. Durch das entsprechende Loslager kann sich somit in vorteilhafter Weise die Prallplatte an ihrem Ende bewegen. Während das in Transportrichtung gesehen vordere Ende der Prallplatte keine Translationsbewegung durchführt, biegt sich beispielsweise der mittlere Teil durch, sodass das Ende der Prallplatte leicht verschoben wird. Wird die Durchbiegung der Platte wieder aufgehoben, kann das in Transportrichtung nachgeordnete Ende der Prallplatte sich wieder in umgekehrter Richtung bewegen (entsprechend der Freiheitsgrade, die das Loslager zulässt). Somit kann sich die Prallplatte beispielsweise elastisch durchbiegen, ohne insgesamt fest eingespannt zu sein, was nach einiger Betriebszeit und einer Reihe von Stößen durch transportierte Körper zu Verformungen der Prallplatte führen würde. Vielmehr biegt sich die Prallplatte sodann in vorbestimmter Weise, wobei die Biegung auch größere Amplituden annehmen kann als es bei einer insgesamt fest eingespannten Prallplatte der Fall wäre, da das Ende der Prallplatte nur mit einem Loslager gelagert wird. Das Festlager wiederum sorgt dafür, dass die Prallplatte ortsfest in der Hohlstruktur bleibt, sodass immer der gleiche Teil der Hohlstruktur geschützt werden kann.

Innerhalb einer Krümmung wirken die Fliehkräfte nach außen, sodass die transportierten Körper ebenfalls tendenziell nach außen bewegt werden und an den äußeren Teil der Hohlstruktur stoßen können. Daher ist es besonders vorteilhaft, die Schutzwirkung dadurch zu verbessern, dass die Schutzvorrichtung in der äußeren Kurve der Krümmung bei einem Ausführungsbeispiel der Erfindung angebracht ist. Da dort ansonsten die größte Abnutzung stattfindet, kann auf dieser Weise gegebenenfalls entscheidend die Haltbarkeit der Platte verbessert werden.

Bei einer vorteilhaften Ausführungsform der Erfindung ist die Prallplatte so ausgebildet, dass sie den Querschnitt des Hohlkörpers in Projektion in Transportvorrichtung vollständig überdeckt, sodass die transportierten Körper gegen die Prallplatte stoßen können, wenn sie zu einer der Krümmungen im Hohlkörper hinbewegt werden. Diese Projektion bildet im Wesentlichen den Teil, auf den die transportierten Körper stoßen können. Vor der Krümmung besitzen die transportierten Körper in Transportrichtung eine gewisse Geschwindigkeit, welche sie, wenn man annimmt, dass keine Beschleunigung auf die Körper wirkt, beibehalten. In diesem Fall würden die Körper folglich gegen die Hohlstruktur stoßen, wenn die Hohlstruktur in ihrem Verlauf abbiegt und ihre Richtung ändert. Zwar werden die Körper durch das Gebläse entlang des Absaugschlauchs beschleunigt. Ist aber die kinetische Energie der Körper zu groß, und reicht die entsprechende Beschleunigung entlang des weiteren Verlaufs innerhalb des Hohlkörpers nicht aus, so werden die Körper regelmäßig beim Transport gegen die Hohlstruktur prallen. Wird zumindest die Projektionsfläche auf den Hohlkörper in Transportrichtung abgedeckt, so wird statistisch gesehen der größte Teil, auf den die transportierten Körper prallen können, geschützt und somit ebenfalls die Langlebigkeit und die Schutzwirkung verbessert.

Bei einer bevorzugten Weiterbildung der Erfindung ist ein Transportventilator zum Absaugen und zur Erzeugung des transportierenden Luftstroms durch den Hohlkörper vorgesehen, wobei dieser Transportventilator hinsichtlich der Transportrichtung der Prallplatte nachgeschaltet ist. Der Ventilator wird somit durch die Prallplatte geschützt, und die Vorrichtung wird insgesamt sehr viel widerstandsfähiger, robuster und hat daher sehr viel längere Standzeiten. Körper, die mit dem Luftstrom mittransportiert werden, prallen sodann auf ihren Transportweg zunächst auf die Prallplatte, werden dort in der Regel abgebremst und passieren erst dann den Transportventilator.

Weitere Ausführungsformen der Erfindung können zudem vorsehen, dass der Transportventilator so angeordnet ist, dass die Stromrichtung durch den Transportventilator senkrecht zur Transportrichtung vor der Prallplatte verläuft, d.h. dass sich die Transportrichtung beim Passieren der Anordnung aus Prallplatte und nachgeschalteten Transportventilator ändert, insbesondere senkrecht dazu verläuft. Darüber hinaus besteht die Möglichkeit, den Transportventilator so anzuordnen, dass die von der Prallplatte abprallenden transportierten Körper nicht direkt auf die Rotorblätter des Transportventilators gelangen, insbesondere die flächige Ausdehnung der Prallplatte senkrecht zur Ebene verläuft, in der die Rotorblätter rotieren.

Wenn die Prallplatte beispielsweise schräg zur Transportrichtung unmittelbar vor der Prallplatte verläuft, so prallen transportierte Körper auf die Prallplatte in einem bestimmten Winkel zur Lotrichtung an der entsprechenden Aufprallstelle auf der Prallplatte und werden "reflektiert". Beim idealen elastischen Stoß wäre der Auftreffwinkel genauso groß wie der Abprallwinkel (z.B. gemessen zum Lot auf die Aufprallfläche). Zudem würden idealerweise Aufprall und Abprall innerhalb der gleichen Ebene erfolgen. Bei inelastischen Stößen wird die Prallplatte zumindest einen Teil der Energie beim Aufprall aufnehmen und nicht mehr an den Körper zurückgeben. Des Weiteren können auch zusätzliche Effekte auftreten, da manche der transportierten Körper möglicherweise klebrig sind und bereits deshalb kein elastischer Stoß vorliegt oder weil die Struktur der Prallplatte nicht völlig flach ist oder zum Beispiel ein Wellenprofil aufweist. Insbesondere dann, wenn die Ebene, in der die Rotorblätter rotieren, senkrecht zur Ausdehnung der Prallplatte angeordnet ist, und darüber hinaus die Rotorblätter seitlich versetzt zur Prallplatte liegen, werden die abprallenden Körper nicht direkt auf die Rotorblätter gelangen. Dadurch wird die Gefahr noch einmal verringert, dass die Rotorblätter beschädigt werden.

Besonders vorteilhaft ist an einer derartigen Anordnung des Transportventilators, bei welcher der Ventilator der Prallplatte nachgeschaltet ist und sich zusätzlich in unmittelbarer Nähe zum Ventilator befindet, dass die transportierten Körper durch den Aufprall auf der Prallplatte kinetische Energie verlieren, also abgebremst werden und mit reduzierter Geschwindigkeit den Transportventilator passieren können.

Um das Risiko von Beschädigungen am Transportventilator noch einmal verringern zu können, können die Rotorblätter bei einer vorteilhaften Weiterbildung der Erfindung ein Wellenprofil aufweisen, insbesondere eines, dass in einer einzigen Richtung ausgerichtet ist. Durch diese Maßnahme wird der Transport der im Luftstrom bewegten Körper grundsätzlich verbessert, während die Rotorblätter selbst stabiler ausgebildet sind und nicht so leicht beschädigt werden können.

### Ausführungsbeispiel

Ein Ausführungsbeispiel der Erfindung ist den Zeichnungen dargestellt und wird nachstehend unter Angabe weiterer Einzelheiten und Vorteile näher erläutert.

### Im Einzelnen zeigen:

- Figur 1: eine schematische Darstellung einer Absaugvorrichtung gemäß der Erfindung für eine Holzsäge;
- Figur 2: eine schematische Schnittdarstellung einer Schutzvorrichtung gemäß der Erfindung,
- Figur 3: einen Ausschnitt einer Prallplatte gemäß der Erfindung, sowie
- Figur 4 -7: Darstellungen von einer Prallplatte nachgeschalteten Transportventilatoren in einer Absaugvorrichtung gemäß der Erfindung.

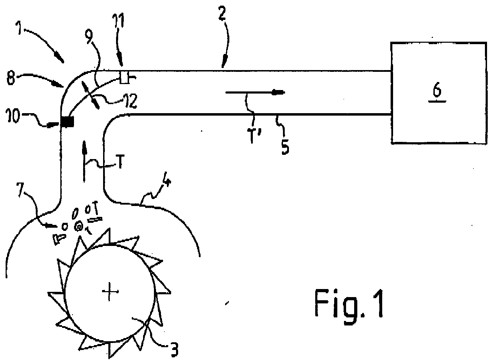

In Figur 1 ist eine schematische Darstellung einer Schutzvorrichtung 1 für eine Absaugvorrichtung 2 zusehen, welche im Zusammenhang mit einer Holzsäge 3 eingesetzt wird. Die Holzsäge 3 ist durch ein Sägeblatt schematisch dargestellt. Unmittelbar bei der Holzsäge 3 befindet sich eine Absaugglocke 4, die über ein Absaugrohr 5 mit einem Gebläse 6 verbunden ist. Staub, Späne, Sägemehl und andere Abfallteile, gegebenenfalls auch Schrauben oder Nägel, die sich im zu bearbeitenden Holz befanden, werden mit dem Bezugszeichen 7 gekennzeichnet. Diese Abfälle können über das Rohr 5 in Transportrichtung T beziehungsweise T' in Richtung Gebläse 6 transportiert werden (abgesaugt werden). Das Absaugrohr 5 weist an einer bestimmten Stelle eine Krümmung 8 auf. Im Bereich dieser Krümmung 8 befindet sich die Schutzvorrichtung 1. Diese Schutzvorrichtung 1 umfasst eine Prallplatte 9, welche unmittelbar im Außenbereich der Krümmung 8 angeordnet ist. Die Prallplatte 9 ist wie folgt gelagert:
Im Verlauf der Transportvorrichtung ist die Prallplatte zunächst mit einem Festlager oder Schwenklager 10 gelagert, sodass dieses Ende der Prallplatte auch bei Durchbiegungen der Prallplatte 9 ortsfest bleibt und allenfalls seinen Winkel zur Transportrichtung T ändert. Am anderen Ende der Prallplatte 9 (in Transportrichtung T beziehungsweise T' gesehen) befindet sich ein Loslager 11. Durch dieses Loslager 11 kann das Ende der Prallplatte 9 in oder entgegengesetzt zur Transportrichtung T' verschoben werden. Diese Verschiebung des Endes der Prallplatte 9 am Loslager 11 erfolgt unterstützend, wenn sich die Prallplatte 9 durchbiegen soll. Die Bewegungen der Prallplatte 9 ist in Figur 1 mit dem Doppelpfeil 12 gekennzeichnet. Die abzusaugenden Körper 7 werden über die Absaugglocke 4 durch den Sog des Gebläses 6 in Transportrichtung T bewegt, das heißt sie gelangen in das Absaugrohr 5. Im Bereich der Krümmung 8 müssen die Körper 7 ihre Bewegungsrichtung ändern, nämlich von T in die Bewegungsrichtung T', das heißt um 90°.

Wäre keine Schutzvorrichtung 1, insbesondere keine Prallplatte 9 vorhanden, so würden die Körper 7 im Bereich der Krümmung 8 auf äußere Wand des Rohrs 5 treffen. Dies würde nach einiger Zeit immer mehr zur Beschädigung des Rohres 5 führen, bis dieses ausgetauscht werden müsste.

Durch die Schutzvorrichtung 1 prallen die Körper 7 jedoch im Bereich der Krümmung 8 auf die Prallplatte 9. Am vorderen Ende (gesehen in Transportrichtung T) ist die Prallplatte 9 fixiert und kann höchstens ihren Winkel zur Transportrichtung T ändern. Diese Fixierung geschieht durch das Festlager beziehungsweise Schwenklager 10. Die Prallplatte 9 biegt sich durch den Aufprall (vgl. Richtungspfeil 12) zunächst im Bereich der Krümmung 8 nach außen hin durch. Diese Biegung wird dadurch erleichtert, dass am hinteren Ende (gesehen in Transportrichtung T beziehungsweise T') sich ein Loslager 11 befindet, welches eine Verschiebung des Endes der Prallplatte 9 in Richtung T' ermöglicht. Gegebenenfalls wird die Prallplatte 9 nach dem Aufprall der Körper 7 wieder zurückfedern (vgl. Doppelpfeil 12). Es ist auch denkbar, dass die Prallplatte 9 beim kontinuierlichen Aufprall von Körpern 7 ständig zu einem gewissen Grad gebogen ist und gegebenenfalls in Richtung 12 leicht federnd sich hin und her bewegt. Um die Biegungsrichtung besser vorgeben zu können, ist es insbesondere auch möglich, die Prallplatte 9 so zu justieren, dass sie eine gewisse Vorkrümmung entlang der Krümmung 8 aufweist.

In vorteilhafter Weise können durch diese Schutzvorrichtungen 1 zum einen die Kosten für die gesamte Absaugvorrichtung erniedrigt werden, da bei handelsüblichen Absaugvorrichtungen es bisher notwendig war, dass das Rohr im Bereich der Krümmung (hier Bezugszeichen 8) verstärkt, oftmals sogar einbetoniert war, was einen wesentlichen höheren Materialaufwand erforderte. Zum anderen erhöht sich die Lebensdauer der Absaugvorrichtung deutlich und auch die Wartungsanfälligkeit kann wesentlich verbessert werden. Überraschenderweise hat sich herausgestellt, dass die Prallplatte trotz der Tatsache, dass sie beim Absaugen den Aufprall des abzusaugenden Materials 7 ausgesetzt ist, weit aus weniger Beschädigungen und Abnutzungen erfährt, als es der entsprechende Bereich des Absaugrohres erfahren würde. Dieser Vorteil wird unter anderem bedingt durch die Lagerung und die elastischen Eigenschaften der Prallplatte, über die das bloße Absaugrohr allein nicht oder nur unter ungünstigen baulichen Änderungen verfügen könnte.

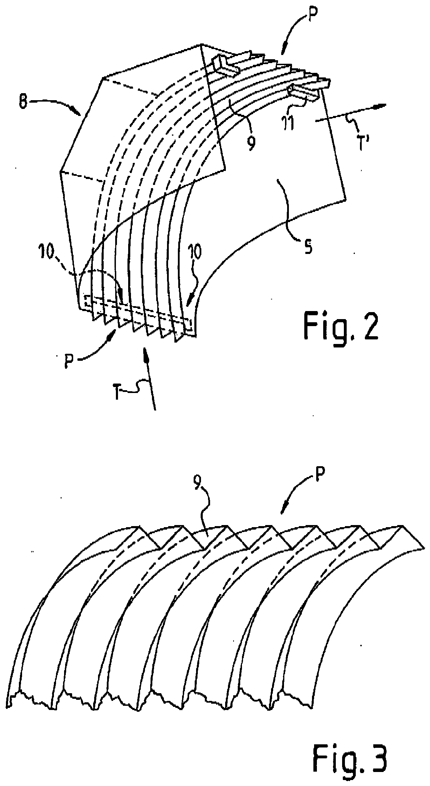

Figur 2 zeigt die Lagerung der Prallplatte 9 im Absaugrohr 5 in einer schematischen Schnittdarstellung. Dargestellt sind auch das Loslager 11 und das Festlager oder Schwenklager 10. Die Prallplatte 9 ist vorgekrümmt innerhalb der Krümmung 8 des Rohres 5 angeordnet. Des Weiteren ist zu sehen, dass die Prallplatte 9 im vorliegenden Ausführungsbeispiel ein Zickzack-Profil P aufweist, welches in Richtung des Übergangs von der Transportrichtung T nach T' verläuft.

Ein vergrößerter Ausschnitt der Prallplatte 9 ist in Figur 3 dargestellt, wobei auch das Zickzackprofil P deutlich erkennbar ist. Das Zickzackprofil P, das in Transportrichtung T bzw. T' verläuft, kann in vorteilhafter Weise kann den laminaren Fluss des Luftstromes zum Absaugen der Körper 7 verbessern. Es kommt daher weniger zu Turbolenzen, da keine plötzlich auftretenden lokalen Luftwiderstände vorhanden sind. Dieser laminare Fluss ermöglicht zum einen ein besseres kontinuierliches Absaugen der Abfallprodukte, zum anderen aber auch, dass durch das Gebläse weniger Energie aufgebracht werden muss, um das Absaugen zu bewirken. Zudem kann der Sog und die Sogstärke mit einem laminaren Fluss gegenüber turbulenten Strömungen verbessert werden, sodass auch mit einer größeren Kraft abgesaugt werden kann. Dementsprechend können nicht nur feine Späne, sondern gegebenenfalls auch größere Teile sowie • Schrauben und Nägel erfasst werden und vom Sog abtransportiert werden. Auch die Absauggeschwindigkeit kann insgesamt verbessert werden.

Ferner ermöglicht ein Zickzack- oder Wellenprofil (hier das Profil P), dass die aufprallenden Körper 7 nicht senkrecht auf die Prallplatte 9 in der Regel treffen, sondern meist eher unter einem Winkel von annähernd 45°. Die Stabilität der Prallplattes 9 wird vergrößert. Um den laminaren Fluss zu ermöglichen, sollte die Profilrichtung in Transportrichtung T beziehungsweise T' verlaufen. Durch den Winkel des Zickzackprofils P oder Wellenprofils muss die Prallplatte 9 beim Stoßen der Körper 7 beziehungsweise beim Aufprall eine geringere Energie aufnehmen.

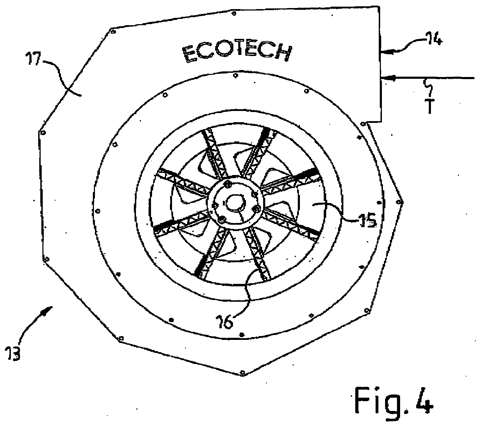

Figur 4 zeigt einen Ausschnitt 13 aus einer Hohlstruktur in einer Absaugvorrichtung. Der Luftstrom gelangt zunächst über den Bereich 14 in die Struktur 13. Dargestellt ist ebenfalls die Transportrichtung T. Ebenfalls zu sehen ist der Transportventilator 15, wobei die Ebene, in der die Rotorblätter 16 des Transportventilators rotieren, parallel zur Transportrichtung T verläuft. Nach Passieren bzw. während des Passierens des Transportventilators 15 verläuft der Luftstrom also senkrecht zur Zeichenebene, d.h. auch senkrecht zur ursprünglichen Transportrichtung T. Innerhalb des Gehäuses 17, das den Ausschnitt 13 der Hohlstruktur umschließt, ist auch die Prallplatte angeordnet.

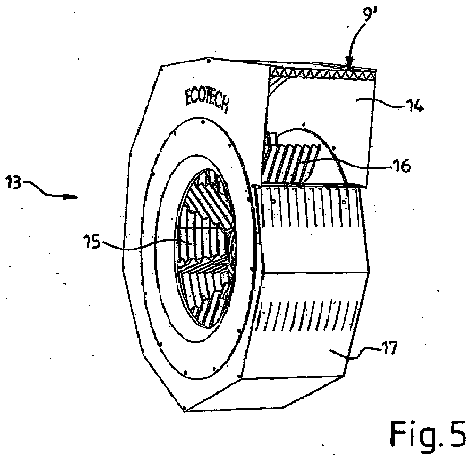

Figur 5 zeigt den gleichen Ausschnitt 13 der Hohlstruktur mit dem Einlassbereich 14 sowie einer Prallplatte 9', die ein Wellenprofil, hier genauer gesagt in Form eines Zick-Zack-Profils aufweist. Ebenfalls dargestellt ist der Transportventilator 15 mit den Rotorblätter 16. Im vorliegenden Fall verläuft die Ebene, in der die Rotorblätter rotieren, senkrecht zur Ausdehnung der Prallplatte. Bei der vorliegenden Ausführungsform gelangen jedoch die von der Prallplatte 9' abprallenden Körper direkt in den Bereich der Rotation der Rotorblätter 16 des Transportventilators 15 und werden dann seitlich aus dem Gehäuse 17 hinausbefördert.

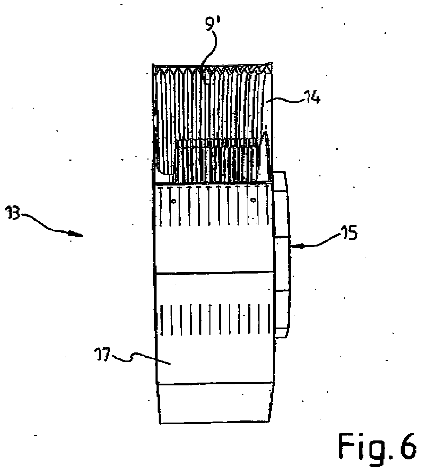

Figur 6 zeigt den gleichen Ausschnitt 13 mit Blickrichtung entlang der Transportrichtung T, d.h. direkt in den Öffnungsbereich 14 auf die Prallplatte 9'.

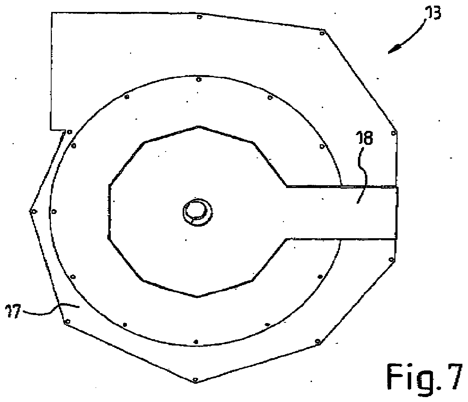

Figur 7 wiederum zeigt noch einmal das Gehäuse 17 mit der Lagerungsanordnung 18 für den Transportventilator 15. Der Ausschnitt 13 kann als kompakte, abgeschlossene Baueinheit betrachtet werden, die in die Hohlstruktur einer Absaugvorrichtung eingebaut werden kann.

Die Absaugvorrichtung gemäß der Erfindung bzw. deren Ausführungsbeispiele können grundsätzlich auch in sonstigen Überdruck-Absauganlagen eingesetzt werden, und nicht nur in Verbindung mit einem sogenannten Zyklon zum Absaugen von Stäuben oder sonstigen bei Bearbeitung von Werkstücken in Werkzeugmaschinen anfallenden Körpern.

### Bezugszeichenliste:

- 1: Schutzvorrichtung
- 2: Absaugvorrichtung
- 3: Holzsäge
- 4: Absaugglocke
- 5: Absaugrohr
- 6: Gebläse
- 7: Abfallkörper
- 8: Krümmung
- 9: Prallplatte
- 9': Prallplatte
- 10: Schwenklager
- 11: Loslager
- 12: Biegerichtung
- 13: Ausschnitt aus Hohlstruktur / Baueinheit
- 14: Öffnungsbereich
- 15: Transportventilator
- 16: Rotorblätter
- 17: Gehäuse
- 18: Aufnahmestruktur / Lagerungsstruktur

- P: Zickzackprofil
- T: Transportrichtung
- T': Transportrichtung (um 90° gegenüber T gedreht)

## Patentansprüche

1. Hohlstruktur (5) mit einer Schutzvorrichtung (1) zum Schutz der Hohlstruktur (5) in Transportvorrichtungen und/oder Abscheidevorrichtungen, welche zum Transport und/oder Abscheiden von Körpern (7) ausgebildet sind, wobei in der Hohlstruktur die Körper in einer Transportrichtung transportiert werden können, wie zum Beispiel in Absaugvorrichtungen (2), Förderanlagen, filternden Abscheidern und Fliehkraftabscheidern, umfassend: eine Prallplatte (9) zur schützenden Abdeckung der zu schützenden Hohlstruktur, wobei die Prallplatte so ausgebildet und in der Hohlstruktur so angebracht ist, dass der zu schützende Teil der Hohlstruktur in der Transportrichtung (T) abgedeckt ist, sodass die Körper beim Transport auf die Prallplatte anstelle des zu schützenden Teils der Hohlstruktur prallen können, wobei die Prallplatte eine flächige Ausdehnung besitzt und so in der Hohlstruktur gelagert ist, dass die Prallplatte (9, 9') senkrecht (12) zu dieser Fläche abfedernd und/oder elastisch bewegbar und/oder auslenkbar ist, wobei die Prallplatte insbesondere so angebracht ist, dass sie sich beim Aufprall der transportierten Körper biegen kann, **dadurch gekennzeichnet, dass** an einer Seite der Prallplatte ein Festlager zur festen Anbringung oder ein Schwenklager (10) zur schwenkbaren Anbringung der Prallplatte an der Hohlstruktur vorhanden und wobei ein Loslager (11) zur Aufnahme von Bewegungen eines Endes der Prallplatte aufgrund von Biegungen der Prallplatte vorgesehen ist, sodass das festlager- oder schwenklagerseitige Ende der Prallplatte (9, 9') bei Durchbiegung der Prallplatte (9, 9') ortsfest bleibt und/oder seinen Winkel zur Transportrichtung (T) ändert und sodass durch das Loslager (11) das loslagerseitige Ende der Prallplatte (9, 9') in oder entgegen der geänderten Transportrichtung (T') verschoben werden kann.

2. Hohlstruktur nach Anspruch 1, **dadurch gekennzeichnet, dass** die Prallplatte (9) aus Stahl, vorzugsweise Edelstahl und/oder Federstahl gefertigt ist.

3. Absaugvorrichtung (2) zum Absaugen von Körpern (7), insbesondere von Abfallgut aus einem Bearbeitungsprozess einer Werkzeugmaschine (3), insbesondere für die Holzbearbeitung oder spanabhebende Bearbeitung, mit einer Hohlstruktur, insbesondere einem Absaugrohr, zum Abtransport der abgesaugten Körper, **gekennzeichnet durch** eine Hohlstruktur nach einem der vorgenannten Ansprüche.

4. Absaugvorrichtung nach Anspruch 3 , **dadurch gekennzeichnet, dass** wenigstens eine der Schutzvorrichtungen in einer Krümmung (8) der Holstruktur angeordnet ist, in der die transportierten Körper beim Transport eine Änderung der Bewegungsrichtung erfahren.

5. Absaugvorrichtung nach Anspruch 3 oder 4 , **dadurch gekennzeichnet, dass** das Festlager und/oder Schwenklager (10) in Transportrichtung (T, T') vor dem Loslager (11) angeordnet ist.

6. Absaugvorrichtung nach einem der Ansprüche 3 bis 5, **dadurch gekennzeichnet, dass** wenigstens eine der Schutzvorrichtungen (1) in der äußeren Kurve der Krümmung (8) angebracht ist.

7. Absaugvorrichtung nach einem der Ansprüche 3 bis 6, **dadurch gekennzeichnet, dass** die Prallplatte (9) so ausgebildet ist, dass sie den Querschnitt des Hohlkörpers (5) in Projektion in Transportrichtung vollständig überdeckt, sodass die transportierten Körper (7) gegen die Prallplatte stoßen können, wenn sie zu einer der Krümmungen (8) im Hohlkörper hin bewegt werden.

## Claims

1. A hollow structure (5) with a protective device (1) for the protection of the hollow structure (5) in transport devices and/or separation devices, which are designed for the transport and/or separation of bodies (7), wherein in the hollow structure the bodies can be transported in a transport device, such as, for example, in suction devices (2), conveyor systems, filtering separators and centrifugal separators, comprising: an impact plate (9) for the protective covering of the hollow structure to be protected, wherein the impact plate is designed and is mounted in the hollow structure such that the part of the hollow structure to be protected is covered in the transport direction (T), so that the bodies can collide during the transport with the impact plate instead of the part of the hollow structure to be protected, wherein the impact plate has a flat extension and is mounted in the hollow structure such that the impact plate (9, 9') is absorbingly and/or elastically movable and/or deflectable perpendicular (12) to this surface area, wherein the impact plate in particular is mounted such that it can bend upon impact of the transported bodies, **characterized in that** on one side of the impact plate a fixed bearing is available for the fixed attachment or a pivot bearing (10) for the pivotal attachment of the impact plate to the hollow structure and wherein a floating bearing (11) is provided for receiving movements of an end of the impact plate due to bends of the impact plate, so that the end of the impact plate (9, 9') on the fixed bearing or pivot bearing side remains stationary during the deflection of the impact plate (9, 9') and/or changes its angle to the transport direction (T) and so that through the floating bearing (11) the end on the floating bearing side of the impact plate (9, 9') can be shifted in or contrary to the changed transport direction (T').

2. A hollow structure according to Claim 1, **characterized in that** the impact plate (9) is made from steel, preferably stainless steel and/or spring steel.

3. A suction device (2) for the extraction by suction of bodies (7), in particular of waste material from a processing procedure of a machine tool (3), in particular for wood processing or cutting processing, with a hollow structure, in particular a suction pipe, for the removal of the sucked off bodies, **characterized by** a hollow structure according to one of the aforementioned claims.

4. A suction device according to Claim 3, **characterized in that** at least one of the protective devices is arranged in a curvature (8) of the hollow structure, in which the transported bodies experience a change of the direction of movement during the transport.

5. A suction device according to Claim 3 or 4, **characterized in that** the fixed bearing and/or the pivot bearing (10) is arranged in the transport direction (T, T') in front of the floating bearing (11).

6. A suction device according to one of Claims 3 to 5, **characterized in that** at least one of the protective devices (1) is mounted in the outer curve of the curvature (8).

7. A suction device according to one of Claims 3 to 6, **characterized in that** the impact plate (9) is designed such that it completely covers the cross section of the hollow body (5) in projection in the transport direction, such that the transported bodies (7) can hit against the impact plate, if they are moved towards one of the curvatures (8) in the hollow body.

## Revendications

1. Structure creuse (5) avec un dispositif de protection (1) pour la protection de la structure creuse (5) dans des dispositifs de transport et/ou des dispositifs de dépôt, qui sont conçus pour le transport et/ou le dépôt de corps (7), moyennant quoi, dans la structure creuse, les corps peuvent être transportés dans une direction de transport, par exemple dans des dispositifs d'aspiration (2), des installations de convoyage, des séparateurs à filtration, des séparateurs à force centrifuge, comprenant : une plaque déflectrice (9) pour le recouvrement protecteur de la structure creuse à protéger, la plaque déflectrice étant conçue et montée dans la structure creuse de façon à ce que la partie de la structure creuse à protéger soit recouverte dans la direction de transport (T), de façon à ce que les corps puissent heurter la plaque déflectrice au lieu de la partie de la structure creuse à protéger, la plaque déflectrice présentant une extension plane et étant logée dans la structure creuse de façon à ce que la plaque déflectrice (9, 9') puisse être déplacée et/ou déviée perpendiculairement (12) à cette surface avec un amortissement et/ou de manière élastique, la plaque déflectrice étant plus particulièrement montée de façon à pouvoir se plier lors de l'impact des corps à transporter, **caractérisé en ce que**, sur un côté de la plaque déflectrice, se trouve un palier fixe pour le montage fixe ou un palier pivotant (10) pour le montage pivotant de la plaque déflectrice sur la structure creuse et un palier libre (11) est prévu pour l'absorption des mouvements d'une extrémité de la plaque déflectrice du fait des pliages de la plaque déflectrice, de façon à ce que l'extrémité de la plaque déflectrice (9, 9'), du côté du palier fixe ou du palier pivotant, reste stationnaire lors d'un pliage de la plaque déflectrice (9, 9') et/ou modifie son angle par rapport à la direction de transport (T) et de façon à ce que, grâce au palier libre (11), l'extrémité de la plaque déflectrice (9, 9') du côté du palier libre puisse être décalée dans la direction de transport (T') modifiée ou dans la direction opposée.

2. Structure creuse selon la revendication 1, **caractérisée en ce que** la plaque déflectrice (9) est constituée d'acier, de préférence d'acier inoxydable et/ou d'acier à ressort.

3. Dispositif d'aspiration (2) pour l'aspiration de corps (7), plus particulièrement de déchets provenant d'un processus d'usinage d'une machine-outil (3), plus particulièrement pour l'usinage du bois ou un usinage par enlèvement de copeaux, avec une structure creuse, plus particulièrement un tuyau d'aspiration, pour l'évacuation des corps aspirés, **caractérisé par** une structure creuse selon l'une des revendications précédentes.

4. Dispositif d'aspiration selon la revendication 3, **caractérisé en ce qu'**au moins un des dispositifs de protection est disposé dans une courbure (8) de la structure creuse, dans laquelle les corps transportés subissent, lors du transport, une modification de la direction de mouvement.

5. Dispositif d'aspiration selon la revendication 3 ou 4, **caractérisé en ce que** le palier fixe et/ou le palier pivotant (10) est disposé, dans la direction de transport (T, T'), avant le palier libre (11).

6. Dispositif d'aspiration selon l'une des revendications 3 à 5, **caractérisé en ce qu'**au moins un des dispositifs de protection (1) est monté dans la courbe externe de la courbure (8).

7. Dispositif d'aspiration selon l'une des revendications 3 à 6, **caractérisé en ce que** la plaque déflectrice (9) est conçue de façon à recouvrir entièrement la section transversale du corps creux (5) en projection dans la direction de transport,
de façon à ce que les corps transportés (7) puisse heurter la plaque déflectrice lorsqu'ils sont déplacés vers une des courbures (8) dans le corps creux.
